# FASCICULE DE BREVET EUROPEEN

(11) **EP 2 226 521 B1**
(45) Date de publication et mention de la délivrance du brevet: **09.11.2011**
(21) Numéro de dépôt: 10354009.2
(22) Date de dépôt: 05.03.2010
(51) Int. Cl.: F16B 45/00

(54) **Dispositif d'accrochage d'une corde en moulinette**
Vorrichtung zum Einhaken einer Leine zur Seilsicherung beim Klettern
Device for attaching a cord to a shredder

(30) Priorité: 06.03.2009 FR 0901030
(43) Date de publication de la demande: 08.09.2010
(73) Titulaire: Zedel, 38920 Crolles (FR)
(72) Inventeur: Petzl, Paul, 38530 Barraux (FR)
(74) Mandataire: Hecké, Gérard

(56) Documents cités:
- FR-A1- 2 442 383
- FR-A1- 2 744 419
- US-A- 2 036 135
- US-B1- 6 308 385
- ISPO: "MAMMUT GYM-SYSTEM" INTERNET CITATION 1 février 2009 (2009-02-01), XP002549309 Extrait de l'Internet: URL:http://www.planetsnow.de/aktuelles/ski -equipment/ispo-winter-2009-awa rds.291145.6.htm?skip=4> [extrait le 2009-10-08] -& ISPO: "Infotexte ispo winter 09" INTERNET CITATION 1 février 2009 (2009-02-01), XP002549326 Extrait de l'Internet: URL:http://media.nmm.de/63/infotextispowin ter09_01.02.2009_21376163.pdf> [extrait le 2009-02-01] -& MAMMUT: "Gym System - Custom indoor Hardware (Brochure)" 25 janvier 2009 (2009-01-25), 20090125, PAGE(S) 3 - 4 , XP002549327 * page 3 - page 4 *

## Description

### Domaine technique de l'invention

L'invention est relative à un dispositif d'accrochage d'une corde en moulinette, comprenant un crochet ouvert renfermant une roue rotative équipée d'au moins deux encoches de réception de la corde, et un mécanisme anti-retour pour verrouiller la roue dans une position angulaire prédéterminée.

### État de la technique

Un dispositif d'accrochage du genre mentionné est commercialisé par la société MAMMUT, et illustré dans le document ISPO « MAMMUT GYM-SYSTEM » du 1/2/2009, pour permettre un montage de la corde en moulinette. II comporte un mousqueton à l'intérieur duquel est agencée une roue rotative à trois encoches réparties à 120° les unes des autres. La roue est associée à un cliquet anti-retour qui autorise la rotation de la roue dans un sens de rotation, mais la bloque dans le sens inverse. Pour introduire la boucle de corde dans l'encoche de réception, il est nécessaire de placer avec précision la roue rotative dans une position angulaire donnée, pour permettre la mise en place de la corde. Un tel ajustage doit être opéré manuellement avant toute mise en place de la corde.

### Objet de l'invention

L'objet de l'invention consiste à perfectionner un dispositif d'accrochage pour corde en moulinette, permettant une mise en place rapide et aisée de la corde.

Le dispositif selon l'invention est **caractérisé en ce que** la roue est équipée d'un système à point dur élastique pour positionner automatiquement l'une des encoches en regard de l'intervalle d'entrée du crochet.

Selon un mode de réalisation préférentiel, le système à point dur est formé par une paire de billes intercalées entre un ressort à l'intérieur d'un logement ovale de la roue. Les billes prennent appui sur la périphérie interne du logement ovale, et tendent à occuper une position stable lorsqu'elles s'étendent le long du grand axe du logement. L'ensemble billes et ressort traverse un évidement diamétral ménagé dans une portion cylindrique de l'axe de la roue.

Le mécanisme anti-retour comporte un cliquet pivotant sollicité par un ressort pour coopérer alternativement avec une paire de crans diamétralement opposés à la périphérie de la roue.

### Description sommaire des dessins

D'autres avantages et caractéristiques ressortiront plus clairement de la description qui va suivre d'un mode de réalisation de l'invention donné à titre d'exemple non limitatif et représenté aux dessins annexés, dans lesquels :
- la figure 1 est une vue en coupe du dispositif d'accrochage selon l'invention ;
- la figure 2 montre une vue en perspective éclatée du dispositif d'accrochage de la figure 1 ;
- les figures 3 à 5 représentent différentes phases d'accrochage de la corde, respectivement à la mise en place dans l'encoche supérieure, dans une position intermédiaire lors de la rotation de la roue suite à une traction de la corde vers le bas, et en position active d'utilisation.

### Description détaillée de l'invention

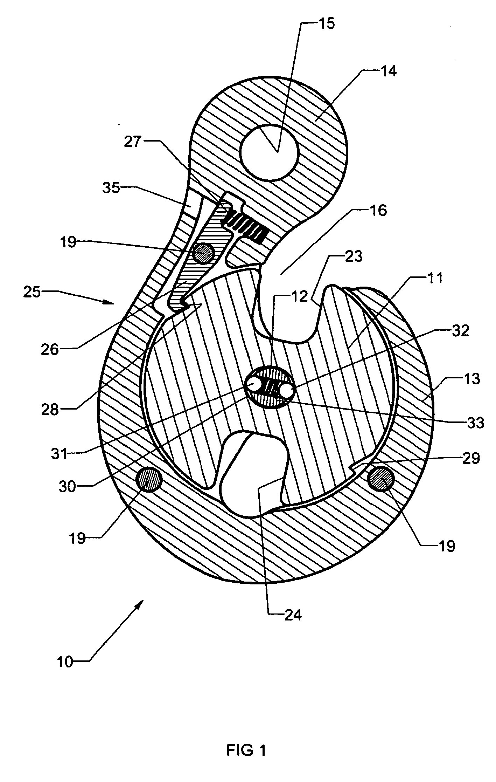

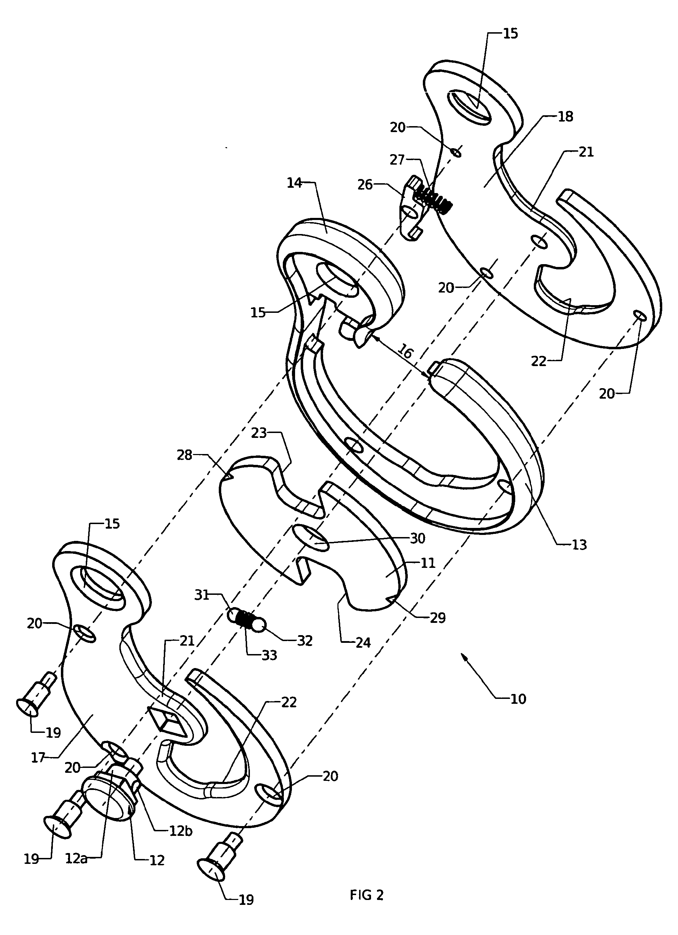

Sur les figures 1 et 2, un dispositif d'accrochage 10 est destine à fixer une corde en moulinette à la partie supérieure d'une voie d'escalade. II comporte une roue 11 rotative montée sur un axe 12 central à l'intérieur d'un corps 13 ouvert en forme de crochet.

Le corps 13 est doté à l'extrémité supérieure d'une embase 14 munie d'un orifice 15 circulaire, ladite embase étant séparée de l'autre extrémité du crochet par un intervalle 16 pour l'introduction de la corde.

L'axe 12 de la roue 11 est porté par deux platines 17, 18 parallèles de structures identiques encadrant le corps 13, et assemblées aux deux faces opposées de ce dernier par des vis de fixation 19 traversant des trous 20. Chaque platine 17, 18 possède un contour périphérique similaire à celui du corps 13, avec en plus un renflement 21 interne dans la partie centrale délimitant une ouverture 22 curviligne s'étendant jusqu'à l'intervalle 16 du corps 13.

La roue 11 est pourvue au moins de deux encoches 23, 24 en U diamétralement opposées, et destinées chacune à recevoir la corde lors de sa mise en place. Un mécanisme anti-retour 25 est associé à la roue 11 pour autoriser sa rotation dans un sens (celui des aiguilles d'une montre dans le cas de la figure 1), et pour la bloquer dans le sens inverse. Selon une variante, la roue 11 peut être équipée de trois ou de quatre encoches.

A titre d'exemple, le mécanisme anti-retour 25 comporte un cliquet 26 pivotant sollicité par un ressort 27 de compression en coopérant alternativement avec deux crans 28, 29 diamétralement opposés à la périphérie de la roue 11. L'axe de pivotement du cliquet 26 est avantageusement constitué par l'une des vis de fixation 19 des platines 17, 18.

Le centre de la roue 11 comprend un logement 30 de forme ovale ou elliptique destiné à coopérer avec une portion cylindrique 12a due l'axe 12. Cette portion cylindrique 12a est percée diamétralement par un évidement 12b transversal, dans lequel est logé un système à point dur élastique.

Le système à point dur comporte une paire de billes 31, 32 logées entre un ressort 33 de compression. Les billes 31, 32 prennent appui sur la périphérie interne du logement 30 ovale, et occupent une position stable lorsqu'elles s'étendent le long du grand axe du logement 30. Dans cette position, l'une des encoches 23 (figure 1) est disposée en regard de l'intervalle 16 pour faciliter l'introduction de la corde sans nécessiter un positionnement manuel de la roue 11.

Le système à point dur élastique peut bien entendu être agencé différemment sans sortir du cadre de l'invention.

Le cliquet 26 est logé à l'intérieur de l'embase 14 du corps 13, et peut être déverrouillé manuellement à travers une saignée 35 d'accès disposée au droit du ressort 27.

Le fonctionnement du dispositif d'accrochage 10 selon l'invention, est le suivant :

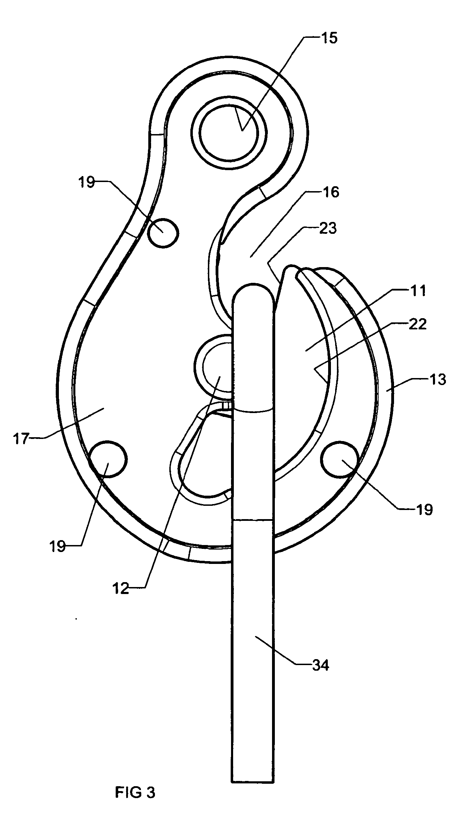

Sur la figure 3, l'encoche 23 de la roue 11 est positionnée automatiquement en regard de l'intervalle 16 par les billes 31, 32 du système à point dur élastique. La corde 34 est posée en son milieu dans l'encoche 23. II est impossible de faire tourner la roue 11 dans le sens inverse des aiguilles d'une montre, car le cliquet 26 est bloqué dans le premier cran 28.

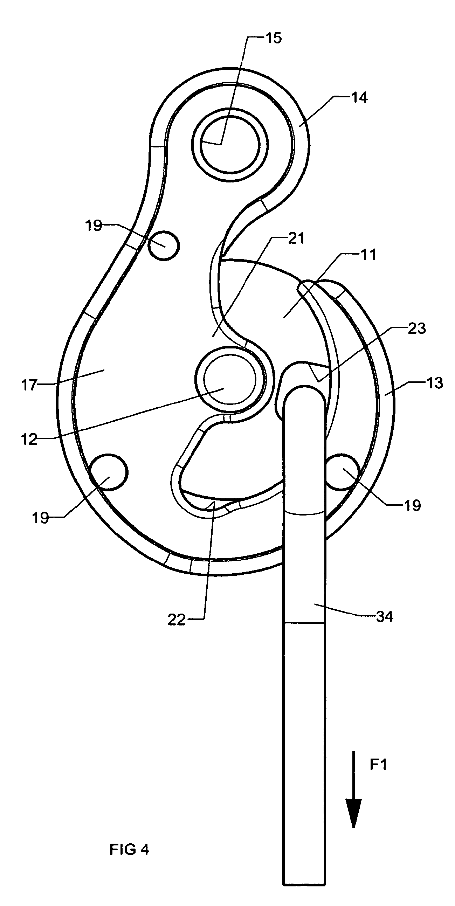

Sur la figure 4, il suffit de tirer la corde 34 vers le bas (flèche F1) pour entraîner la roue 11 rotative dans le sens des aiguilles d'une montre, tout en maintenant la boucle de la corde 34 dans l'encoche 23. Le cliquet 26 est dégagé du premier cran 28 et s'appuie sur la périphérie de la roue 11 durant ce mouvement de rotation autorisé.

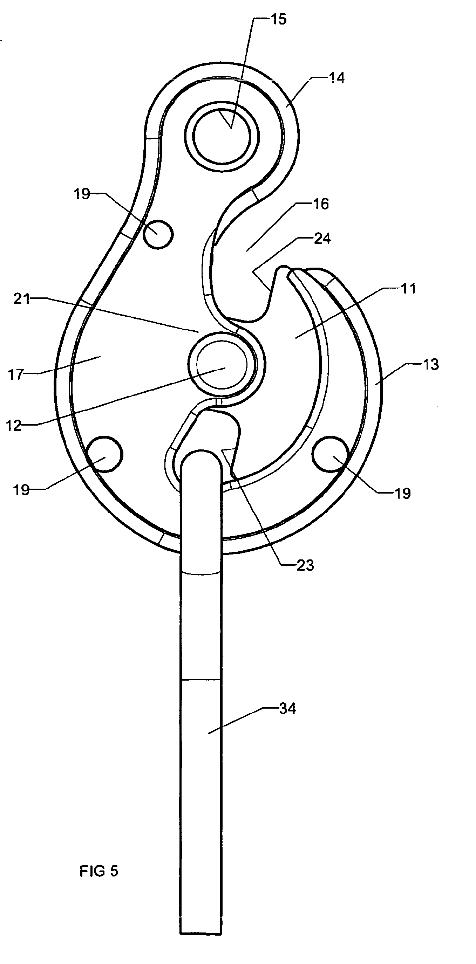

En référence à la figure 5, la course en rotation de la roue 11 correspond à un demi-tour, et le cliquet 26 vient en engagement avec le deuxième cran 29. L'encoche 23 est fermée au fond de l'ouverture 22, et l'autre encoche 24 occupe la position ouverte diamétralement opposée, correspondant à celle de l'encoche 23 sur la figure 3.

Dans cette position d'accrochage de la corde 34, la roue 11 est bloquée par le cliquet 26 dans le sens inverse des aiguilles d'une montre. Toute tentative de rotation dans le sens inverse est également impossible suite à la présence de la corde 34 dans l'encoche 23.

Pour récupérer la corde 34 en moulinette à la base de la voie d'escalade, il suffit de tirer sur l'un des brins de la corde 34 pour la dégager de l'encoche 23. La roue 11 peut ensuite tourner dans le sens des aiguilles d'une montre, et on revient à la position de la figure 3 avec une nouvelle corde.

## Revendications

1. Dispositif d'accrochage d'une corde en moulinette, comprenant un crochet ouvert renfermant une roue (11) rotative équipée d'au moins deux encoches (23, 24) de réception de la corde (34), et un mécanisme anti-retour (25) pour verrouiller la roue dans une position angulaire prédéterminée, **caractérisé en ce que** la roue (11) est équipée d'un système à point dur élastique pour positionner automatiquement l'une des encoches (23, 24) en regard de l'intervalle (16) d'entrée du crochet.

2. Dispositif d'accrochage d'une corde selon la revendication 1, **caractérisé en ce que** le système à point dur est formé par une paire de billes (31,32) intercalées entre un ressort (33) à l'intérieur d'un logement (30) ovale de la roue (11).

3. Dispositif d'accrochage d'une corde selon la revendication 2, **caractérisé en ce que** l'ensemble billes (31,32) et ressort (33) traverse un évidement (12b) diamétral d'une portion cylindrique (12a) de l'axe (12) de la roue (11).

4. Dispositif d'accrochage d'une corde selon l'une quelconque des revendications 1 à 3, **caractérisé en ce que** le mécanisme anti-retour comporte un cliquet (26) pivotant sollicité par un ressort (27) pour coopérer alternativement avec une paire de crans (28,29) diamétralement opposés à la périphérie de la roue (11).

5. Dispositif d'accrochage d'une corde selon l'une quelconque des revendications 1 à 4, **caractérisé en ce que** le crochet est composé d'un corps (13) muni d'un orifice (15) circulaire, et d'une paire de platines (17,18) parallèles encadrant le corps (13) et la roue (11).

## Claims

1. Top rope anchorage device, comprising an open hook enclosing a rotary wheel (11) provided with at least two recesses (23, 24) to receive the rope (34), and a reverse lock mechanism (25) to lock the wheel in a predetermined angular position, **characterized in that** the wheel (11) is provided with an elastical hard spot system for automatically positioning one of the recesses (23, 24) opposite to the hook entering space (16).

2. Rope anchorage device according to claim 1, **characterised in that** the hard spot system is formed by a pair of balls (31, 32) inserted between a spring (33) within an oval cavity (30) of the wheel (11).

3. Rope anchorage device according to claim 2, **characterised in that** the ball (31, 32) and spring (33) assembly passes through a diametral sparing (12b) of a cylindric portion (12a) of the axis (12) of the wheel (11).

4. Rope anchorage device according to one of the preceding claims, **characterised in that** the reverse lock mechanism comprises a pivoting catch (26) stressed by a spring (27) to cooperate alternately with a pair of diametrally opposed notches (28, 29) at the periphery of the wheel (11).

5. Rope anchorage device according to any of claims 1 to 4, **characterised in that** the hook is made up of a body (13) provided with a circular aperture (15) and a pair of parallel plates (17, 18) which frame the body (13) and the wheel (11).

## Patentansprüche

1. Toprope-Seilsicherungsvorrichtung, die einen offenen Haken umfasst, der ein Drehrad (11) einschließt, das mit mindestens zwei Aussparungen (23, 24) zur Aufnahme des Seils (34) versehen ist, und einen Rückdreh-Sicherungsmechanismus (25) zum Verriegeln des Rads in einer vorbestimmten Wickelposition, **dadurch gekennzeichnet, dass** das Rad (11) mit einem System aus einem elastischen Widerstandspunkt versehen ist, damit eine der Aussparungen (23, 24) automatisch gegenüber dem Eintrittszwischenraum (16) des Hakens positioniert wird.

2. Seilsicherungsvorrichtung nach Anspruch 1, **dadurch gekennzeichnet, dass** das System mit Widerstandspunkt von einem Paar Kugeln (31, 32) gebildet wird, die in eine Feder (33) im Inneren einer ovalen Aufnahme (30) des Rads (11) eingefügt sind.

3. Seilsicherungsvorrichtung nach Anspruch 2, **dadurch gekennzeichnet, dass** die Einheit aus Kugeln (31,32) und Feder (33) durch eine diametrale Aussparung (12b) eines zylindrischen Bereichs (12a) der Achse (12) des Rads (11) geführt ist.

4. Seilsicherungsvorrichtung nach einem der Ansprüche 1 bis 3, **dadurch gekennzeichnet, dass** der Rückdreh-Sicherungsmechanismus eine schwenkbare Sperraste (26) umfasst, die von einer Feder (27) beansprucht wird, um abwechselnd mit einem Paar Rastkerben (28, 29) zusammenzuwirken, die einander diametral entgegengesetzt am Umfang des Rads (11) vorgesehen sind.

5. Seilsicherungsvorrichtung nach einem der Ansprüche 1 bis 4, **dadurch gekennzeichnet, dass** der Haken von einem Körper (13) gebildet wird, der mit einer kreisrunden Öffnung (15) und einem Paar paralleler Platten (17, 18) versehen ist, die den Körper (13) und das Rad (11) einfassen.
